# EUROPEAN PATENT APPLICATION

(11) **EP 3 193 460 A1**
(43) Date of publication of application: **19.07.2017**
(21) Application number: 17150158.8
(22) Date of filing: 03.01.2017
(51) Int. Cl.: H04B 5/00, G06K 7/00, G06K 7/10, G06K 19/07, G06K 19/077, H02J 5/00, H02J 7/02

(54) **IC CARD, PORTABLE ELECTRONIC APPARATUS, AND PROCESSING APPARATUS**

(30) Priority: 12.01.2016 JP 2016003712
(71) Applicant: Kabushiki Kaisha Toshiba, Tokyo 105-8001 (JP)
(72) Inventor: SAWAMURA, Satoshi, Minato-ku, Tokyo 105-8001 (JP)
(74) Representative: Horn Kleimann Waitzhofer Patentanwälte PartG mbB

(57) **Abstract**

According to one embodiment, an IC card includes a communication unit, a magnetic field strength determination unit, and a magnetic field strength transmission processing unit. The communication unit transmits/receives data to/from an external apparatus in a non-contact manner. The magnetic field strength determination unit determines a magnetic field strength necessary to execute processing. The magnetic field strength transmission processing unit causes the communication unit to transmit, to the external apparatus, information indicating the magnetic field strength determined by the magnetic field strength determination unit.

## Description

### FIELD

Embodiments described herein relate generally to an IC card, a portable electronic apparatus, and a processing apparatus.

### BACKGROUND

Some portable electronic apparatuses such as an IC card transmit/receive data to/from an IC card processing apparatus as an external terminal in a non-contact manner. A non-contact type IC card receives power supplied by a magnetic field from an IC card processing apparatus. Conventionally, when power (magnetic field strength) becomes short during execution of heavy-load processing or the like, the IC card is reset and returns no response. In this case, the IC card needs to start again from a card authentication procedure, thereby degrading the communication efficiency.

### SUMMARY

To solve the above problem, there are provided an IC card, portable electronic apparatus, and processing apparatus, which can prevent a power shortage.

### BRIEF DESCRIPTION OF THE DRAWINGS

FIG. 1 is a block diagram showing an example of the arrangement of an IC card processing system including an IC card and an IC card processing apparatus according to an embodiment;
FIG. 2 is a block diagram showing an example of the arrangement of the IC card according to the embodiment;
FIG. 3 is a table showing an example of the structure of a level diagram stored in the IC card according to the embodiment;
FIG. 4 is a table showing an example of the structure of a magnetic field table stored in the IC card according to the embodiment;
FIG. 5 is a table showing an example of the structure of an ATTRIB command transmitted by the IC card processing apparatus according to the embodiment;
FIG. 6 is a table showing an example of the structure of an S-block according to the embodiment;
FIG. 7 is a table showing an example of the structure of the PCB of the S-block transmitted by the IC card processing apparatus according to the embodiment;
FIG. 8 is a sequence chart showing an example of the operation of the IC card processing system according to the embodiment; and
FIG. 9 is a flowchart illustrating an example of the operation of the IC card according to the embodiment.

### DETAILED DESCRIPTION

In general, according to one embodiment, an IC card includes a communication unit, a magnetic field strength determination unit, and a magnetic field strength transmission processing unit. The communication unit transmits/receives data to/from an external apparatus in a non-contact manner. The magnetic field strength determination unit determines a magnetic field strength necessary to execute processing. The magnetic field strength transmission processing unit causes the communication unit to transmit, to the external apparatus, information indicating the magnetic field strength determined by the magnetic field strength determination unit.

The embodiment will be described below with reference to the accompanying drawings.

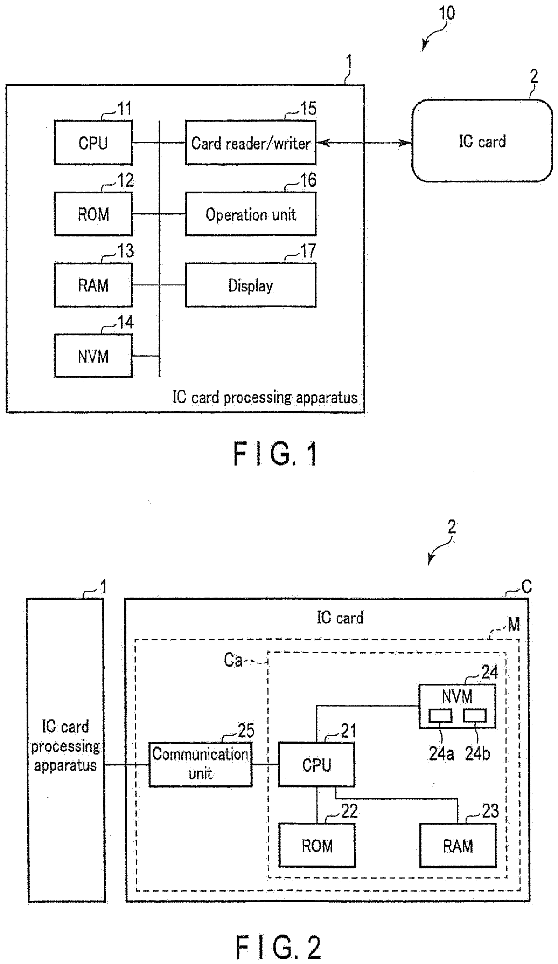

FIG. 1 is a block diagram for explaining an example of the arrangement of an IC card processing system 10 including an IC card 2 as a portable electronic apparatus and an IC card processing apparatus 1 as an external apparatus for communicating with the IC card 2 according to the embodiment.

In the example of the arrangement shown in FIG. 1, the IC card processing apparatus 1 (external apparatus) (processing apparatus) includes a CPU 11, a ROM 12, a RAM 13, an NVM 14, a card reader/writer 15, an operation unit 16, and a display 17. These units are interconnected via a data bus. Note that instead of the arrangement shown in FIG. 1, the IC card processing apparatus 1 may include components, as needed, or exclude specific components.

The CPU 11 has a function of controlling the overall operation of the IC card processing apparatus 1. The CPU 11 may include an internal cache and various interfaces. The CPU 11 implements various processes by executing programs stored in advance in an internal memory, the ROM 12, or the NVM 14. For example, the CPU 11 has a function of transmitting a command from the card reader/writer 15 to the IC card 2 by executing a program, a function of performing various processes based on data such as a response received from the IC card 2, and the like. With these functions, the CPU 11 transmits, to the IC card 2, via the card reader/writer 15, a write command including predetermined data or data input to the operation unit 16 or the like, thereby controlling to request the IC card 2 to perform processing of writing the data.

Note that some of the various functions implemented when the CPU 11 executes the programs may be implemented by a hardware circuit. In this case, the CPU 11 controls the functions executed by the hardware circuit.

The ROM 12 is a nonvolatile memory storing control programs, control data, and the like in advance. The control programs and control data stored in the ROM 12 are incorporated in advance in accordance with the specifications of the IC card processing apparatus 1. The ROM 12 stores, for example, a program (for example, a BIOS) for controlling the circuit board of the IC card processing apparatus 1 and the like.

The RAM 13 is a volatile memory. The RAM 13 temporarily stores data being processed by the CPU 11 and the like. The RAM 13 stores various application programs based on instructions from the CPU 11. The RAM 13 may also store data necessary to execute an application program, the execution result of the application program, and the like.

The NVM 14 is a nonvolatile memory in which data can be written and rewritten. The NVM 14 is implemented by, for example, a hard disk, an SSD, an EEPROM®, a flash memory, or the like. The NVM 14 stores control programs, applications, and various data in accordance with the operation purpose of the IC card processing apparatus 1.

The card reader/writer 15 is an interface apparatus for transmitting/receiving data to/from the IC card 2 in a non-contact manner. For example, the card reader/writer 15 includes a communication control unit and an antenna for wirelessly communicating with the IC card 2. In the card reader/writer 15, power supply, clock supply, reset control, and data transmission/reception for the IC card 2 are performed. The card reader/writer 15 supplies a magnetic field from the antenna or the like to the IC card 2, thereby supplying power.

With these functions, under the control of the CPU 11, the card reader/writer 15 supplies power to the IC card 2, activates (starts) the IC card 2, supplies clocks, performs reset control, transmits various commands, and receives responses to the transmitted commands.

Furthermore, the card reader/writer 15 changes, based on a signal from the CPU 11, the strength of the magnetic field to be output. If, for example, the card reader/writer 15 receives a signal indicating a magnetic field strength from the CPU 11, it outputs a magnetic field of the magnetic field strength indicated by the signal. Note that if no signal is received from the CPU 11, the card reader/writer 15 may output a magnetic field of a default strength.

The operator of the IC card processing apparatus 1 inputs various operation instructions to the operation unit 16. The operation unit 16 transmits, to the CPU 11, data of an operation instruction input by the operator. The operation unit 16 is, for example, a keyboard, a numeric keypad, a touch panel, or the like.

The display 17 is a display device for displaying various kinds of information under the control of the CPU 11. The display 17 is, for example, a liquid crystal monitor or the like. Note that the display 17 may be integrally formed with the operation unit 16.

The IC card 2 will be described next.

The IC card 2 is activated (set in an operable state) by receiving power and the like supplied from an external apparatus such as the IC card processing apparatus 1. For example, the IC card 2 receives a radio wave from the IC card processing apparatus 1 via the antenna serving as a communication interface, a modulation/demodulation circuit, and the like. The IC card 2 is activated by generating operating power and operation clocks from the radio wave by a power supply unit (not shown).

An example of the arrangement of the IC card 2 will be described next.

FIG. 2 is a block diagram schematically showing the example of the arrangement of the IC card 2 according to the embodiment.

The IC card 2 has a card-shaped main body C made of plastic or the like. The IC card 2 incorporates a module M in the main body C. The module M is integrally formed while one or a plurality of IC chips Ca are connected to an external interface (communication interface) as a communication unit, and is embedded in the main body C of the IC card 2.

In the example of the arrangement shown in FIG. 2, the IC card 2 includes a CPU 21, a ROM 22, a RAM 23, an NVM 24, and a communication unit 25. These units are interconnected via a data bus. The CPU 21, the ROM 22, the RAM 23, and the NVM 24 are formed by the one or the plurality of IC chips Ca, and form the module M while being connected to the communication unit 25.

The CPU 21 functions as a control unit for controlling the overall IC card 2. The CPU 21 performs various processes based on control programs and control data stored in the ROM 22 or the NVM 24. For example, the CPU 21 performs various processes in accordance with operation control of the IC card 2 and operation modes of the IC card 2 by executing programs stored in the ROM 22.

Note that some of various functions may be implemented by a hardware circuit. In this case, the CPU 21 controls the functions executed by the hardware circuit.

The ROM 22 is a nonvolatile memory storing control programs, control data, and the like in advance. The ROM 22 is incorporated in the IC card 2 while storing control programs, control data, and the like in the manufacturing stage. That is, the control programs and control data stored in the ROM 22 are incorporated in advance in accordance with the specifications of the IC card 2.

The RAM 23 is a volatile memory. The RAM 23 temporarily stores data being processed by the CPU 21 and the like. For example, the RAM 23 functions as a calculation buffer, a reception buffer, and a transmission buffer. The calculation buffer temporarily holds the results of various calculation processes executed by the CPU 21. The reception buffer holds command data received from the IC card processing apparatus 1 via the communication unit 25. The transmission buffer holds a message (response data) to be transmitted to the IC card processing apparatus 1 via the communication unit 25.

The NVM 24 is implemented by a nonvolatile memory such as an EEPROM® or a flash ROM in which data can be written and rewritten. The NVM 24 stores control programs, applications, and various data in accordance with the operation purpose of the IC card 2. In the NVM 24, for example, programs files, data files, and the like are created. Control programs, various data, and the like are written in each created file.

The NVM 24 includes a storage area 24a (storage unit) storing a level diagram and a storage area 24b storing a magnetic field table. The level diagram and the magnetic field table will be described later.

The communication unit 25 is an interface for transmitting/receiving data to/from the IC card processing apparatus 1 in a non-contact manner. That is, the communication unit 25 is an interface for communicating with the card reader/writer 15 of the IC card processing apparatus 1. The communication unit 25 receives a magnetic field supplied from the card reader/writer 15 to supply power. The communication unit 25 supplies power to each unit of the IC card 2 such as the CPU 21 via a power supply unit (not shown).

For example, the communication unit 25 includes an antenna and a communication control unit such as a modulation/demodulation circuit for wirelessly communicating with the card reader/writer 15 of the IC card processing apparatus 1.

The level diagram stored in the storage area 24a will be described next.

The level diagram indicates a magnetic field strength corresponding to a bit. For example, the level diagram indicates magnetic field strength respectively corresponding to a plurality of bits.

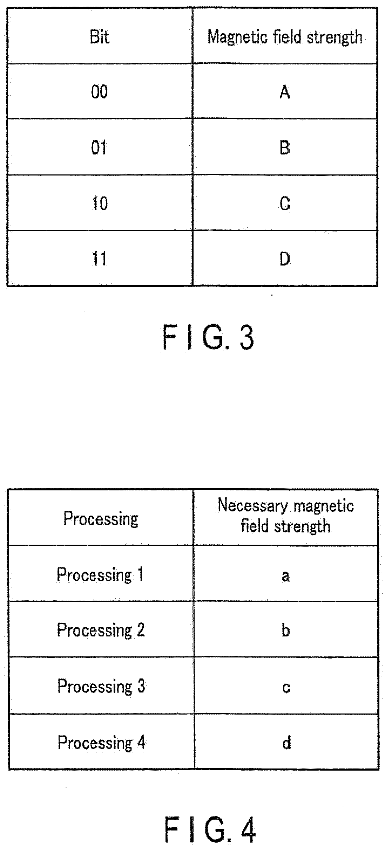

FIG. 3 shows an example of the structure of the level diagram stored in the storage area 24a.

As shown in FIG. 3, the level diagram stores a "bit" and a "magnetic field strength" in association with each other. In this example, the "bit" indicates a 2-bit string. That is, the level diagram indicates magnetic field strengths respectively corresponding to "00", "01", "10", and "11".

The "magnetic field strength" indicates the strength of a magnetic field supplied by the IC card processing apparatus 1. For example, the magnetic field strength is indicated using a predetermined unit (for example, A/m).

In the example shown in FIG. 3, the level diagram indicates "A", "B", "C", and "D" as the "magnetic field strengths" respectively corresponding to "00", "01", "10", and "11".

Note that the level diagram may store a magnetic field strength corresponding to a 1 bit or 3- or more-bit string. The structure of the level diagram is not limited to any specific one.

The level diagram is stored in the storage area 24a in advance. For example, the level diagram is stored in the storage area 24a at the time of manufacturing the IC card 2. In addition, the level diagram may be appropriately updated.

The magnetic field table stored in the storage area 24b will be described next.

The magnetic field table indicates a magnetic field strength necessary for processing executed by the IC card 2. That is, the magnetic field table indicates a magnetic field strength for generating power necessary for processing.

FIG. 4 shows an example of the structure of the magnetic field table stored in the storage area 24b.

As shown in FIG. 4, the magnetic field table stores "processing" and a "necessary magnetic field" in association with each other. That is, the magnetic field table stores a necessary magnetic field strength for each process.

The "processing" indicates processing executed by the IC card 2. For example, the "processing" is processing of reading out predetermined data, numerical calculation for encryption, data transmission/reception processing, or the like. The "processing" is not limited to any specific structure.

The "necessary magnetic field strength" indicates the strength of a magnetic field necessary to execute the corresponding "processing". That is, the "necessary magnetic field strength" indicates the strength of a magnetic field for generating power necessary to execute the "processing".

In the example shown in FIG. 4, the magnetic field table indicates that "necessary magnetic field strengths" corresponding to "processing 1", "processing 2", "processing 3", and "processing 4" are "a", "b", "c", and "d", respectively. Note that the structure of the magnetic field table need only be a structure in which processing contents are associated with a necessary magnetic field strength, and is not limited to that shown in FIG. 4.

The format of an ATTRIB command transmitted by the IC card processing apparatus 1 will be described next.

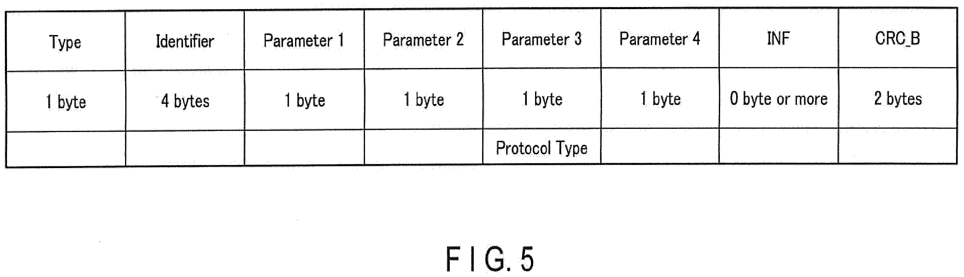

FIG. 5 is a table showing an example of the format of the ATTRIB command.

As shown in FIG. 5, the ATTRIB command includes "type", "identifier", "parameter 1", "parameter 2", "parameter 3", "parameter 4", "INF", and "CRC_B" fields.

The "type" field represents a command type. For example, the "type" field includes "1D".

The "identifier" field represents an identifier for specifying the IC card 2. For example, the "identifier" field indicates PUPI (Pseudo-Unique PICC Identifier).

The "parameter 1", "parameter 2", "parameter 3", and "parameter 4" fields store the parameters of the ATTRIB command. The "parameter 3" field represents a protocol type. For example, if the "parameter 3" field indicates "01h", this means that ISO/IEC 14443-4 is complied with. For example, if the "parameter 3" field indicates "00h", this means that ISO/IEC 14443-4 is not complied with. In this example, if the "parameter 3" field indicates "11h", this means that the level diagram is requested.

The "INF" field stores transmission data.

The "CRC_B" field stores a check code.

A function implemented by the CPU 21 of the IC card 2 will be described next.

The CPU 21 has a function of transmitting the level diagram to the IC card processing apparatus 1 via the communication unit 25 (level diagram transmission processing unit). For example, the CPU 21 transmits, to the IC card processing apparatus 1, the level diagram as a response to the ATTRIB command.

For example, if the "parameter 3" field of the ATTRIB command indicates "11h", the CPU 21 transmits, to the IC card processing apparatus 1, the level diagram as a response to the ATTRIB command.

Furthermore, the CPU 21 stores the level diagram in an S-block, and transmits it to the IC card processing apparatus 1.

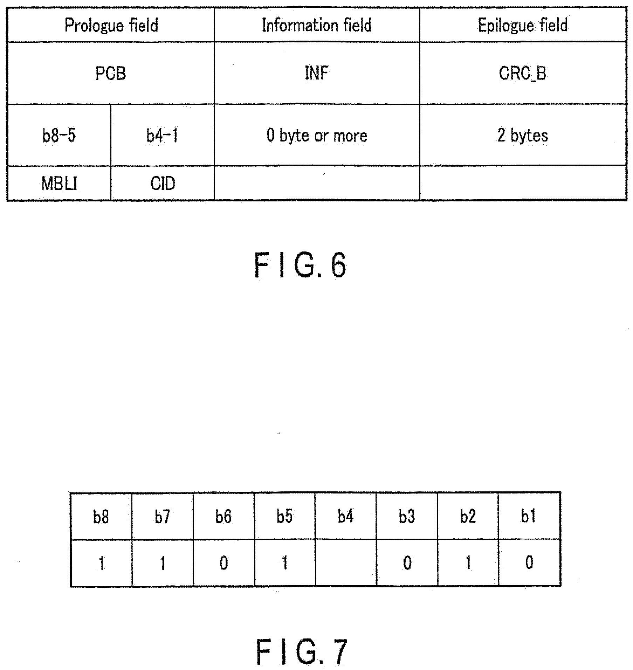

FIG. 6 is a table showing an example of the format of the S-block.

As shown in FIG. 6, the S-block includes a "prologue field", an "information field", and an "epilogue field".

The "prologue field" includes a "PCB" field. The "PCB" field includes "b8" to "b5" (MBLI) and "b4" to "b1" (CID). For example, if "b6" and "b5" represent "00", DESELECT is indicated. If "b6" and "b5" represent "11", WTX is indicated.

The "information field" includes an "INF" field. The "INF" field stores transmission data and the like.

The "epilogue field" includes a "CRC_B" field. The "CRC_B" field stores a check code.

For example, the CPU 21 generates an S-block which stores the level diagram in an "INF" field. The CPU 21 transmits the generated S-block to the IC card processing apparatus 1.

The CPU 21 has a function of measuring a magnetic field strength received by the communication unit 25 (measurement unit). For example, the IC card 2 may further include a sensor for measuring a magnetic field strength, and the CPU 21 may measure a magnetic field strength via the sensor. Furthermore, the CPU 21 may measure a magnetic field strength based on the corruption status of data from the IC card processing apparatus 1 and the like. A method in which the CPU 21 measures a magnetic field strength is not limited to any specific one.

The CPU 21 has a function of determining a magnetic field strength necessary for processing to be executed (magnetic field strength determination unit). For example, the CPU 21 determines a magnetic field strength with reference to the magnetic field table. An example of processing of determining a necessary magnetic field strength will be described below.

The CPU 21 receives a command from the IC card processing apparatus 1 via the communication unit 25 (command reception processing unit). The CPU 21 extracts processes necessary to execute the received command. The CPU 21 acquires the "necessary magnetic field strengths" of the extracted processes with reference to the magnetic field table. The CPU 21 determines a magnetic field strength necessary for the processing based on the acquired "necessary magnetic field strengths". For example, the CPU 21 may determine, as the magnetic field strength necessary for the processing, a largest one of the acquired "necessary magnetic field strengths".

The CPU 21 has a function of transmitting, if the measured magnetic field strength has not reached the determined magnetic field strength, the determined magnetic field strength to the IC card processing apparatus 1 via the communication unit 25 (magnetic field strength transmission processing unit).

For example, the CPU 21 generates an S-block storing the determined magnetic field strength in an "INF" field, and transmits the generated S-block to the IC card processing apparatus 1. The CPU 21 stores bits representing the determined magnetic field strength in the "INF" field of the S-block based on the level diagram.

For example, if the determined magnetic field strength is "C", the CPU 21 stores "10" in the "INF" field of the S-block.

FIG. 7 shows an example of the structure of the PCB field of the S-block in which the determined magnetic field strength (designated magnetic field strength) is stored.

As shown in FIG. 7, if "b6" and "b5" indicate "01", this means that the designated magnetic field strength is stored.

A function implemented by the CPU 11 of the IC card processing apparatus 1 will be described next.

The CPU 11 has a function of receiving the level diagram from the IC card 2 (level diagram reception processing unit). For example, the CPU 11 transmits the ATTRIB command to the IC card 2 via the card reader/writer 15. The CPU 11 receives, from the IC card 2, the S-block storing the level diagram in the "INF" field as a response to the ATTRIB command. The CPU 11 extracts the level diagram from the S-block, and acquires it.

Furthermore, the CPU 11 has a function of receiving the magnetic field strength designated by the IC card 2 (magnetic field strength reception processing unit). For example, the CPU 11 receives, as a response to the command, from the IC card 2, the S-block storing the designated magnetic field strength in the "INF" field. The CPU 11 extracts the designated magnetic field strength from the S-block, and acquires it.

The CPU 11 also has a function of causing the card reader/writer 15 to output a magnetic field of a strength based on the received magnetic field strength (the magnetic field strength designated by the IC card) (magnetic field control unit).

For example, the CPU 11 receives a bit string as the designated magnetic field strength. The CPU 11 acquires a magnetic field strength corresponding to the received bit string with reference to the level diagram. The CPU 11 transmits, to the card reader/writer 15, a signal for outputting a magnetic field of the acquired magnetic field strength. Note that in accordance with the distance between the card reader/writer 15 and the IC card 2 and the like, the CPU 11 may adjust the strength of the magnetic field to be output so that the IC card 2 can receive the magnetic field of the designated magnetic field strength.

The card reader/writer 15 outputs the magnetic field of the acquired magnetic field strength based on the transmitted signal.

After causing the card reader/writer 15 to output the magnetic field of the acquired magnetic field strength, the CPU 11 transmits the S-block to the IC card 2. The S-block instructs the IC card 2 to execute the immediately preceding command. Assume that if "b6" and "b5" of the "PCB" field of the S-block indicate "10b", the IC card 2 is instructed to execute the immediately preceding command. Note that the CPU 11 may store, in the S-block, information indicating the magnetic field strength output from the card reader/writer 15.

An example of the operation of the IC card processing system 10 will be described next.

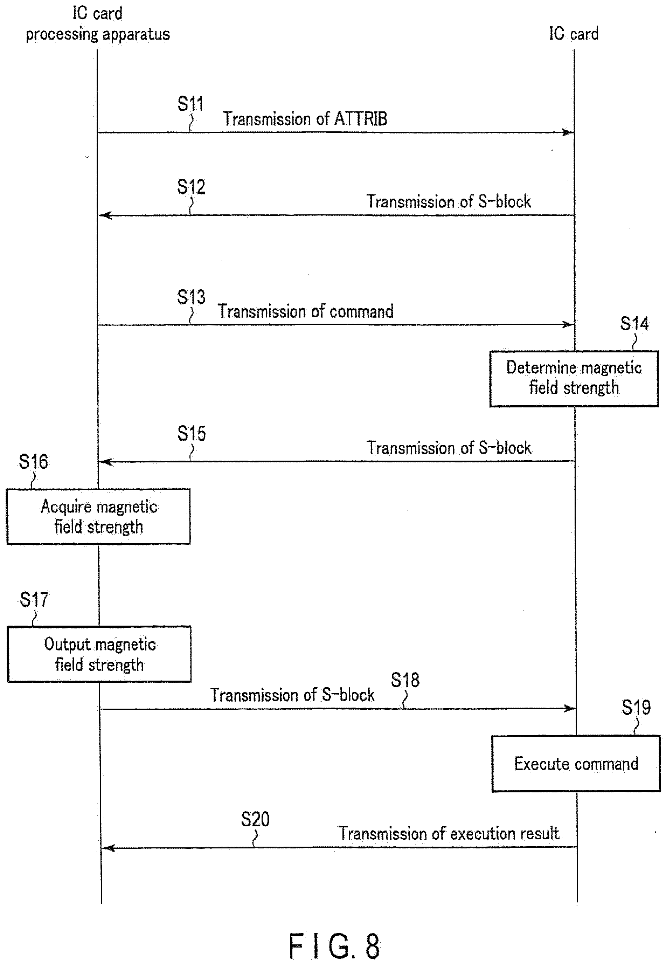

FIG. 8 is a sequence chart for explaining the example of the operation of the IC card processing system 10.

The IC card processing apparatus 1 transmits the ATTRIB command to the IC card 2 (S11).

The IC card 2 receives the ATTRIB command. After receiving the ATTRIB command, the IC card 2 transmits an S-block storing the level diagram in an "INF" field to the IC card processing apparatus 1 (S12).

The IC card processing apparatus 1 receives the S-block. After receiving the S-block, the IC card processing apparatus 1 transmits a command to the IC card 2 (S13). In this example, the IC card processing apparatus 1 transmits the command as an I-block.

The IC card 2 receives the command. After receiving the command, the IC card 2 determines a magnetic field strength necessary to execute the command (S14). In this example, assume that the magnetic field strength of the magnetic field output from the IC card processing apparatus 1 has not reached the necessary magnetic field strength.

After determining the magnetic field strength, the IC card 2 transmits, to the IC card processing apparatus 1, an S-block storing bits representing the determined magnetic field strength in an "INF" field (S15).

The IC card processing apparatus 1 receives the S-block. After receiving the S-block, the IC card processing apparatus 1 acquires a magnetic field strength represented by the bit string stored in the S-block with reference to the level diagram received in S12 (S16). After acquiring the magnetic field strength, the IC card processing apparatus 1 outputs a magnetic field of the acquired magnetic field strength to the IC card 2 (S17).

After outputting the magnetic field, the IC card processing apparatus 1 transmits an S-block to the IC card 2 (S18).

The IC card 2 receives the S-block. After receiving the S-block, the IC card 2 executes the command received in S13 (S19). After executing the command, the IC card 2 transmits an execution result to the IC card processing apparatus 1 (S20).

Note that the IC card processing apparatus 1 may subsequently transmit a command to the IC card 2. The IC card 2 may determine a magnetic field strength for each command in the same way, and transmit it to the IC card processing apparatus 1.

An example of the operation of the CPU 21 of the IC card 2 will be described next.

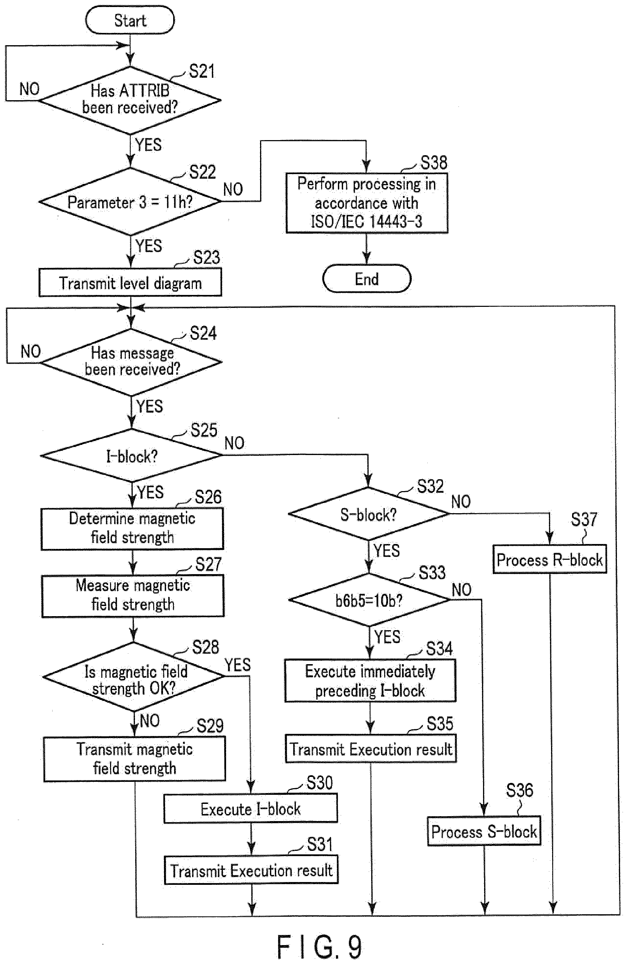

FIG. 9 is a flowchart for explaining the example of the operation of the CPU 21 of the IC card 2.

First, the CPU 21 determines whether the ATTRIB command has been received via the communication unit 25 (step S21). If it is determined that no ATTRIB command has been received (NO in step S21), the CPU 21 returns to step S21.

If it is determined that the ATTRIB command has been received (YES in step S21), the CPU 21 determines whether the "parameter 3" field of the ATTRIB command indicates "11h" (step S22). If it is determined that the "parameter 3" field indicates "11h" (YES in step S22), the CPU 21 transmits, via the communication unit 25, an S-block storing the level diagram (step S23) (corresponding to S12).

After transmitting the S-block, the CPU 21 determines whether a message has been received via the communication unit 25 (step S24). If it is determined that no message has been received (NO in step S24), the CPU 21 returns to step S24.

If it is determined that the message has been received (YES in step S24), the CPU 21 determines whether the message is an I-block (step S25). That is, the CPU 21 determines whether a command has been received.

If it is determined that the message is an I-block (YES in step S25), the CPU 21 determines, with reference to the magnetic field table, a magnetic field strength necessary to execute the I-block (command) (step S26) (corresponding to S14).

After determining the magnetic field strength, the CPU 21 measures a magnetic field strength received by the communication unit 25 (step S27).

After measuring the magnetic field strength, the CPU 21 determines whether the measured magnetic field strength has reached the determined magnetic field strength (step S28). If it is determined that the measured magnetic field strength has not reached the determined magnetic field strength (NO in step S28), the CPU 21 transmits, via the communication unit 25, an S-block storing bits representing the magnetic field strength in an "INF" field (step S29) (corresponding to S15).

If it is determined that the measured magnetic field strength has reached the determined magnetic field strength (YES in step S28), the CPU 21 executes the I-block (step S30). After executing the I-block, the CPU 21 transmits an execution result via the communication unit 25 (step S31).

If the S-block is transmitted (step S29) or the execution result is transmitted (step S30), the CPU 21 returns to step S24.

If it is determined that the message is not an I-block (NO in step S25), the CPU 21 determines whether the message is an S-block (step S32). If it is determined that the message is an S-block (YES in step S32), the CPU 21 determines whether "b6" and "b5" of the "PCB" field of the S-block indicate "10b" (step S33).

If it is determined that "b6" and "b5" indicate "10b" (YES in step S33), the CPU 21 executes the immediately precedingly received I-block (step S34) (corresponding to S19) (execution unit). After executing the I-block, the CPU 21 transmits an execution result via the communication unit 25 (step S35) (corresponding to S20).

If it is determined that "b6" and "b5" do not indicate "10b" (NO in step S33), the CPU 21 processes the received S-block (step S36).

If the execution result is transmitted (step S35) or the S-block is processed (step S36), the CPU 21 returns to step S24.

If it is determined that the message is not an S-block (NO in step S32), the CPU 21 processes an R-block (step S37). After processing the R-block, the CPU 21 returns to step S24.

If it is determined that the "parameter 3" field does not indicate "11h" (NO in step S22), the CPU 21 processes the ATTRIB command in accordance with ISO/IEC 14443-3 (step S38). After processing the ATTRIB command in accordance with ISO/IEC 14443-3, the CPU 21 ends the operation.

Note that the CPU 21 may execute step S27 before step S26. That is, the CPU 21 need only execute step S27 before step S28.

Furthermore, S11 and S12 (steps S21 to S23) may be executed in anti-collision (level 3). Furthermore, S13 to S20 (steps S24 to S37) may be executed at level 4.

The IC card having the above arrangement can determine a magnetic field strength necessary to execute a command, and designate the necessary magnetic field strength for the IC card processing apparatus. Upon receiving the magnetic field strength designated by the IC card, the IC card processing apparatus outputs a magnetic field of a strength set based on the designated magnetic field strength. As a result, the IC card processing apparatus can output a magnetic field of the magnetic field strength required by the IC card to execute the command. Therefore, the IC card can output a magnetic field with which the processing of the command can be executed. Consequently, the IC card can prevent a situation in which the command cannot be executed due to a power shortage.

The IC card can share the level diagram with the IC card processing apparatus. Therefore, the IC card can transmit, by the bit of the level diagram, a magnetic field strength necessary to execute processing. As a result, the IC card need not transmit, as a numerical value, the magnetic field strength necessary to execute the processing, and reduce the amount of data for transmitting the designated magnetic field strength.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A portable electronic apparatus (2) comprising:
a communication unit (25) configured to transmit/receive data to/from an external apparatus in a non-contact manner;
a magnetic field strength determination unit (21) configured to determine a magnetic field strength necessary to execute processing; and
a magnetic field strength transmission processing unit (21) configured to cause the communication unit to transmit, to the external apparatus, information indicating the magnetic field strength determined by the magnetic field strength determination unit.

2. The apparatus of claim 1, further comprising:
a storage unit (24a) configured to store a level diagram indicating a magnetic field strength corresponding to a bit; and
a level diagram transmission processing unit (21) configured to cause the communication unit to transmit the level diagram to the external apparatus,
wherein the magnetic field strength transmission processing unit causes the communication unit to transmit, to the external apparatus, as the magnetic field strength determined by the magnetic field strength determination unit, a bit representing the magnetic field strength in the level diagram.

3. The apparatus of claim 1 or 2, further comprising:
a measurement unit (21) configured to measure a magnetic field strength received by the communication unit,
wherein if the magnetic field strength measured by the measurement unit has not reached the magnetic field strength determined by the magnetic field strength determination unit, the magnetic field strength transmission processing unit causes the communication unit to transmit the magnetic field strength to the external apparatus.

4. The apparatus of any one of claims 1 to 3, further comprising:
a command reception processing unit (21) configured to cause the communication unit to receive a command from the external apparatus,
wherein if the command reception processing unit causes the communication unit to receive the command, the magnetic field strength determination unit extracts processing necessary for the command, and determines the magnetic field strength necessary to execute the processing.

5. The apparatus of claim 4, further comprising:
an execution unit (21) configured to execute the command after the magnetic field strength transmission processing unit causes the communication unit to transmit the magnetic field strength.

6. The apparatus of claim 1, further comprising:
a module (M) including the communication unit, the magnetic field strength determination unit, and the magnetic field strength transmission processing unit; and
a main body (C) incorporating the module.

7. The apparatus of any one of claims 1 to 6, wherein the portable electronic apparatus comprises an IC card.

8. A processing apparatus (1) comprising:
a communication unit (15) configured to supply a magnetic field to a portable electronic apparatus, and transmit/receive data to/from the portable electronic apparatus in a non-contact manner;
a magnetic field strength reception processing unit (11) configured to cause the communication unit to receive information indicating a magnetic field strength designated by the portable electronic apparatus; and
a magnetic field control unit (11) configured to cause the communication unit to output a magnetic field of a strength based on the magnetic field strength designated by the portable electronic apparatus.

9. The apparatus of claim 8, further comprising:
a level diagram reception processing unit (11) configured to cause the communication unit to receive a level diagram indicating a magnetic field strength corresponding to a bit from the portable electronic apparatus,
wherein the magnetic field strength reception processing unit causes the communication unit to receive a bit as the magnetic field strength, and
the magnetic field control unit causes the communication unit to output a magnetic field of a strength based on the magnetic field strength corresponding to the bit in the level diagram.
